# EUROPEAN PATENT APPLICATION

(11) **EP 2 833 518 A1**
(43) Date of publication of application: **04.02.2015**
(21) Application number: 13767431.3
(22) Date of filing: 07.03.2013
(51) Int. Cl.: H02K 1/28

(54) **MOTOR SHAFT**

(30) Priority: 30.03.2012 JP 2012081101
(71) Applicant: Kayaba Industry Co., Ltd., Tokyo 105-6111 (JP)
(72) Inventor: SAKAMOTO, Suguru, Minato-ku, Tokyo 105-6111 (JP)
(74) Representative: Grünecker, Kinkeldey, Stockmair & Schwanhäusser
(86) International application number: PCT/JP2013/056285
(87) International publication number: WO 2013/146164

(57) **Abstract**

A motor shaft onto the outer periphery of which a plurality of members are to be press-fitted includes a plurality of step portions which successively expand the outer diameter of the motor shaft from one end side, and a plurality of press-fit portions which are arranged adjacent to one end sides of the respective step portions and onto which the members are to be press-fitted.

## Description

### TECHNICAL FIELD

The present invention relates to a motor shaft which integrally rotates with a rotor of a motor.

### BACKGROUND ART

There is known a motor shaft onto which a rotor of a motor is to be press-fitted and which is integrally rotatable with the rotor.

JP2012-10425A discloses to construct a motor by press-fitting a rotor, a bearing, a resolver and the like from both sides of a motor shaft.

### SUMMARY OF INVENTION

However, if a certain member is mounted in advance at one side of the motor shaft, it is not possible to press-fit the rotor, the bearing, the resolver and the like onto the motor shaft from the both sides.

This invention aims to provide a motor shaft onto which members can be press-fitted from one direction.

According to one aspect of the present invention, a motor shaft onto the outer periphery of which a plurality of members are to be press-fitted includes a plurality of step portions which successively expand the outer diameter of the motor shaft from one end side and a plurality of press-fit portions which are arranged adjacent to one end sides of the respective step portions and onto which the members are to be press-fitted.

The details as well as other features and advantages of this invention are set forth in the remainder of the specification and are shown in the accompanying drawings.

### BRIEF DESCRIPTION OF DRAWINGS

FIG. 1 is a view showing a motor shaft in the present embodiment.
FIG. 2 is a sectional view schematically showing a state where members are press-fitted on the motor shaft.

### DESCRIPTION OF EMBODIMENT

Hereinafter, an embodiment of the present invention is described with reference to the accompanying drawings.

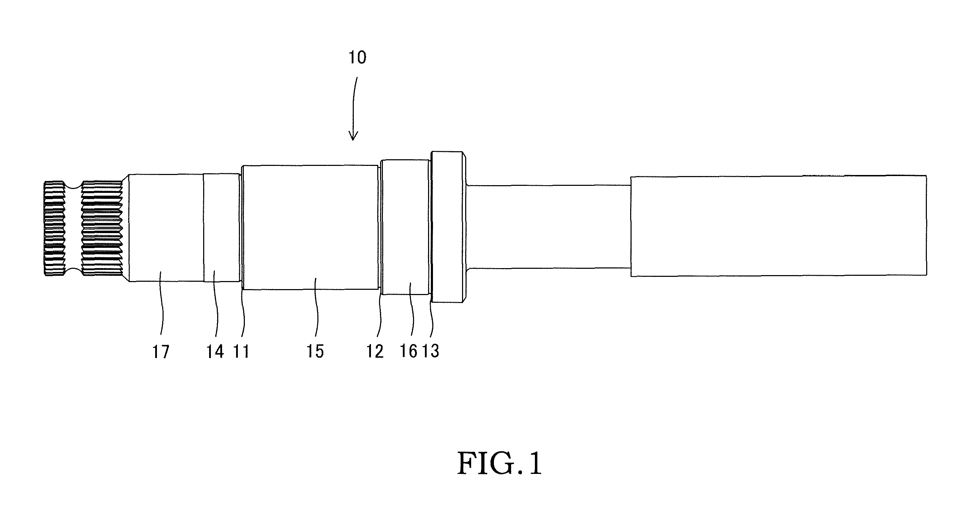

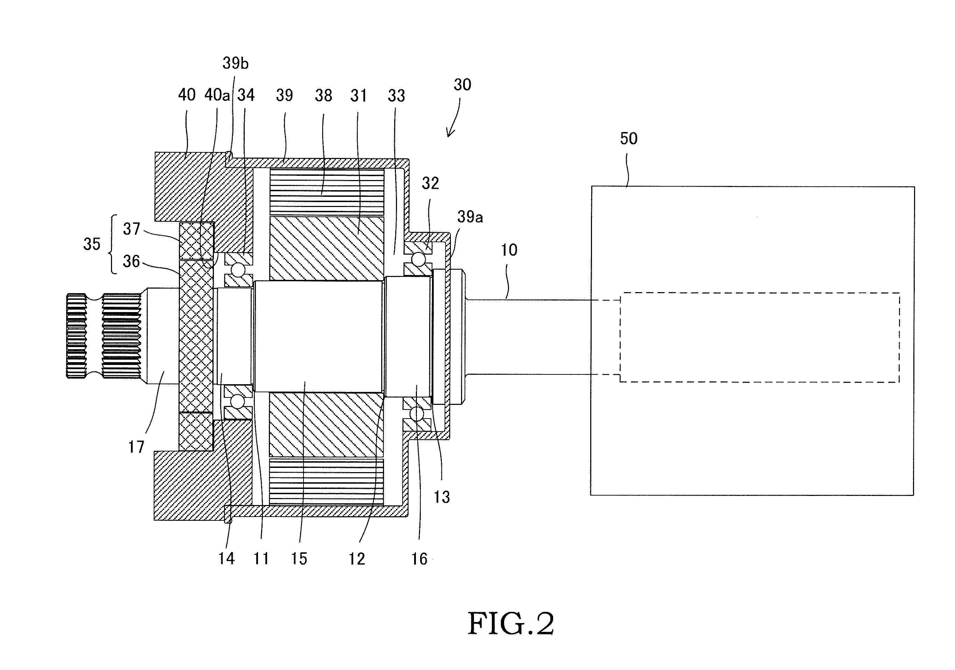

FIG. 1 is a view showing a motor shaft 10 in the present embodiment. FIG. 2 is a sectional view schematically showing a state where constituent members of a motor 30 are mounted on the motor shaft 10. The motor shaft 10 is integrally fixed to a rotor 31 of the motor 30 by press-fitting and rotates with the rotation of the rotor 31.

As shown in FIG. 1, the motor shaft 10 includes a plurality of step portions 11 to 13 which successively expand the outer diameter of the motor shaft 10 from one end side (left end side of FIG. 1) and a plurality of press-fit portions 14 to 16 which are arranged adjacent to one end sides of the respective step portions 11 to 13 and onto the outer peripheries of which members are to be press-fitted.

The step portions 11 to 13 are composed of three step portions of a first step portion 11, a second step portion 12 and a third step portion 13 successively arranged from the one end side of the motor shaft 10.

The press-fit portions 14 to 16 are composed of a first press-fit portion 14 formed at a position closer to the one end side than the first step portion 11 and adjacent to the first step portion 11, a second press-fit portion 15 formed at a position closer to the one end side than the second step portion 12 and adjacent to the second step portion 12 and a third press-fit portion 16 formed at a position closer to the one end side than the third step portion 13 and adjacent to the third step portion 13.

Accordingly, the second press-fit portion 15 is formed to have a larger diameter than the first press-fit portion 14, the third press-fit portion 16 is formed to have a larger diameter than the second press-fit portion 15 and the motor shaft 10 is formed to have the outer periphery whose diameter is expanded stepwise from the one end side toward the other end side (right end side of FIG. 1).

The motor shaft 10 further includes a small-diameter portion 17 having a diameter slightly smaller than the first press-fit portion 14 on a side closer to the one end side than the first press-fit portion 14. The third press-fit portion 16 and the second step portion 12 are arranged at a distance from each other in an axial direction of the motor shaft 10.

Next, a mounting procedure of the constituent members of the motor 30 onto the motor shaft 10 is described.

It should be noted that since a component 50 having a diameter larger than the inner diameters of the members to be mounted on the motor shaft 10 is mounted in advance on the other end side (right end side of FIG. 2) of the motor shaft 10 as shown in FIG. 2, the constituent members of the motor 30 cannot be press-fitted from the other end side of the motor shaft 10.

Accordingly, a first bearing 32 is first fitted from the one end side (left end side of FIG. 2) of the motor shaft 10. Since the inner diameter of the first bearing 32 is set larger than the outer diameters of the first and second press-fit portions 14, 15, the first bearing 32 is press-fitted onto the third press-fit portion 16 after passing the first and second press-fit portions 14, 15.

At this time, the front surface (right side surface in FIG. 2) of the first bearing 32 in a press-fitting direction comes into contact with the third step portion 13, whereby the first bearing 32 is positioned. That is, the first bearing 32 is press-fitted at a suitable position by being press-fitted onto the third press-fit portion 16 and pressed to a position where the first bearing 32 stops.

As shown in FIG. 2, a predetermined interference avoidance gap 33 is defined between the second step portion 12 and one end side of the first bearing 32 in a state where the first bearing 32 is press-fitted on the third press-fit portion 16. This prevents the interference of the rotor 31 and the first bearing 32 during the rotation of the rotor 31 and prevents the generation of rotational resistance in the rotor 31 due to the formation of a magnetic path in the first bearing 32.

Subsequently, the rotor 31 of the motor 30 is fitted from the one end side (left end side of FIG. 2) of the motor shaft 10. Since the inner diameter of the rotor 31 is set larger than the outer diameter of the first press-fit portion 14, the rotor 31 is press-fitted onto the second press-fit portion 15 after passing the first press-fit portion 14.

At this time, the front surface (right side surface in FIG. 2) of the rotor 31 in the press-fitting direction comes into contact with the second press-fit portion 12, whereby the rotor 31 is positioned. That is, the rotor 31 is press-fitted at a suitable position by being press-fitted onto the second press-fit portion 15 and pressed to a position where the rotor 31 stops.

Subsequently, a second bearing 34 is fitted from the one end side (left end side of FIG. 2) of the motor shaft 10. Since the inner diameter of the second bearing 34 is set larger than the outer diameter of the small-diameter portion 17, the second bearing 34 is press-fitted onto the first press-fit portion 14 after passing the small-diameter portion 17.

At this time, the front surface (right side surface in FIG. 2) of the second bearing 34 in the press-fitting direction comes into contact with the first step portion 11, whereby the second bearing 34 is positioned. That is, the second bearing 34 is press-fitted at a suitable position by being press-fitted onto the first press-fit portion 14 and pressed to a position where the second bearing 34 stops.

Subsequently, a resolver rotor 36 of a resolver 35 for detecting a rotation angle of the motor 30 is press-fitted onto the small-diameter portion 17 from the one end side (left end side of FIG. 2) of the motor shaft 10. The resolver rotor 36 is positioned at a position set in advance between the small-diameter portion 17 and the first press-fit portion 14.

A housing 39 is provided on the outer periphery of the motor shaft 10 to surround from the first bearing 32 to the second bearing 34 in the axial direction. A stator 38 of the motor 30 is provided at a position on the inner periphery of the housing 39 facing the outer periphery of the rotor 31.

The motor shaft 10 projects toward the other end side from an other-end side opening 39a of the housing 39. On the other hand, the motor shaft 10 projects toward the one end side from a one-end side opening 39b of the housing 39. A flange cover 40 including a hole 40a, which allows the motor shaft 10 to project, in the center is mounted on the one-end side opening 39b of the housing 39.

A resolver stator 37 is provided at a position on the inner periphery of the flange cover 40 facing the outer periphery of the resolver rotor 36. The inner periphery of the flange cover 40 is further in contact with the outer periphery of the second bearing 34.

This causes the motor shaft 10 to support the housing 39 and the flange cover 40 via the bearings 32, 34 and rotates with the rotation of the rotor 31 of the motor 30. The rotation angle of the motor shaft 10 is detected by the resolver 35.

According to the above embodiment, the following effects are achieved.

Since the press-fit portions 14 to 16 formed on the outer periphery of the motor shaft 10 are formed from the one end side of the motor shaft 10 while the diameters thereof are successively expanded, the rotor 31, the first bearing 32, the second bearing 34 and the resolver 35 that are constituent members of the motor 30 can be press-fitted onto the motor shaft 10 from one direction.

Further, since the respective press-fit portions 14 to 16 are arranged adjacent to the one end sides of the respective step portions 11 to 13 that expand the outer periphery of the motor shaft 10 from the one end side, when the constituent members of the motor 30 are press-fitted onto the respective press-fit portions 14 to 16, the front surfaces in the press-fitting direction come into contact with the respective step portions 11 to 13, whereby each constituent member can be positioned.

Furthermore, since the first bearing 32 is press-fitted onto the third press-fit portion 16, the rotor 31 is press-fitted onto the second press-fit portion 15 and the second bearing 34 is press-fitted onto the first press-fit portion 14, the rotor 31 and the first and second bearings 32, 34 arranged at the both sides of the rotor 31 can be fixed to the motor shaft 10 by being successively press-fitted onto the motor shaft 10.

Furthermore, since the interference avoidance gap 33 is defined between the third press-fit portion 16 and the second step portion 12, the interference of the rotor 31 and the first bearing 32 during the rotation of the rotor 31 can be prevented and the generation of rotational resistance in the rotor 31 due to the formation of a magnetic path in the first bearing 32 can be prevented.

Embodiments of this invention were described above, but the above embodiments are merely examples of applications of this invention, and the technical scope of this invention is not limited to the specific constitutions of the above embodiments.

Although three step portions 11 to 13 and three press-fit portions 14 to 16 are, for example, respectively provided in the present embodiment, two or less of them, or four or more of them may be provided and the number of them can be set as appropriate according to the number of members to be mounted on the motor shaft 10.

This application claims priority based on Japanese Patent Application No.2012-81101 filed with the Japan Patent Office on March 30, 2012, the entire contents of which are incorporated into this specification.

## Claims

1. A motor shaft onto the outer periphery of which a plurality of members are to be press-fitted, comprising:
a plurality of step portions which successively expand the outer diameter of the motor shaft from one end side; and
a plurality of press-fit portions which are arranged adjacent to one end sides of the respective step portions and onto which the members are to be press-fitted.

2. The motor shaft according to claim 1, wherein:
the plurality of members are a rotor of a motor and a first and second bearing respectively arranged at both sides of the rotor in an axial direction;
the plurality of step portions include a first step portion, a second step portion and a third step portion successively from the one end side of the motor shaft;
the plurality of press-fit portions include a first press-fit portion adjacent to the one end side of the first step portion, a second press-fit portion adjacent to the one end side of the second step portion and a third press-fit portion adjacent to the one end side of the third step portion; and
the first bearing is to be press-fitted onto the third press-fit portion, the rotor is to be press-fitted onto the second press-fit portion and the second bearing is to be press-fitted onto the first press-fit portion.

3. The motor shaft according to claim 2, wherein:
an interference avoidance gap is provided between one end side of the third press-fit portion and the second step portion and the one end side of the third press-fit portion and the second step portion are arranged at a distance from each other in an axial direction of the motor shaft.
